# EUROPEAN PATENT SPECIFICATION

(11) **EP 0 913 017 B1**
(45) Date of publication and mention of the grant of the patent: **03.01.2007**
(21) Application number: 97934998.2
(22) Date of filing: 10.07.1997
(51) Int. Cl.: H02H 3/08

(54) **CIRCUIT PROTECTION ARRANGEMENTS**
SCHUTZSCHALTUNGSANORDNUNGEN
CONFIGURATIONS DE PROTECTION POUR CIRCUIT

(30) Priority: 16.07.1996 US 682172
(43) Date of publication of application: 06.05.1999
(73) Proprietor: TYCO Electronics Corporation, Middletown, Pennsylvania 17057-3163 (US)
(72) Inventor: MYONG, Inho, Newark, CA 94560 (US)
(74) Representative: Jay, Anthony William
(86) International application number: PCT/US1997/012571
(87) International publication number: WO 1998/002947

(56) References cited:
- FR-A- 2 294 538
- GB-A- 2 020 904
- US-A- 2 376 658
- US-A- 2 980 779

## Description

This invention relates to electrical circuit overcurrent protection. Positive temperature coefficient (PTC) circuit protection devices are well known. The device is placed in series with a load, and under normal operating conditions is in a low temperature, low resistance state. However, if the current through the PTC device increases excessively, and/or the ambient temperature around the PTC device increases excessively, and/or the normal operating current is maintained for more than the normal operating time, then the PTC device will be "tripped," i.e. converted to a high temperature, high resistance state such that the current is reduced substantially. Generally, the PTC device will remain in the tripped state, even if the current and/or temperature return to their normal levels, until the PTC device has been disconnected from the power source and allowed to cool. Particularly useful PTC devices contain a PTC element which is composed of a PTC conductive polymer, i.e. a composition which comprises (1) an organic polymer, and (2) dispersed, or otherwise distributed, in the polymer, a particulate conductive filler, preferably carbon black. PTC conductive polymers and devices containing them are described, for example in U.S. Patent Nos. 4,237,441, 4,238,812, 4,315,237, 4,317,027, 4,426,633, 4,545,926, 4,689,475, 4,724,417, 4,774,024, 4,780,598, 4,800,253, 4,845,838, 4,857,880, 4,859,836, 4,907,340, 4,924,074, 4,935,156, 4,967,176, 5,049,850, 5,089,801 and 5,378,407. French Patent No. FR 2 294 538 discusses a circuit breaker with a solid state passive overcurrent sensing device.

In a batch of PTC devices made by the same manufacturing process, uncontrollable variations in the process can cause substantial variation in the conditions which will trip any individual device. The largest steady state current which will not cause any of the devices in the batch to trip is referred to herein as the "pass current" (I_{PASS}) or "hold current", and the smallest steady state current which will cause all of the devices to trip is referred to as the "trip current" (I_{TRIP}). In general, the difference between I_{PASS} and I_{TRIP} decreases slowly as the ambient temperature increases. Depending on the particular type of device, I_{TRIP} may for example be 1.5 to 2.5 times I_{PASS} at 20°C. For any individual device, the pass current and the trip current are the same. However, in this specification, reference is made to a PTC device having an I_{PASS} and a different I_{TRIP}, because as a practical matter, the manufacturer of an electrical switch must make use of PTC devices taken from a batch of such devices. Generally, the higher the ambient temperature, the lower the pass current and the trip current. This phenomenon is referred to as "thermal derating", and the term "derating curve" is used to denote a graph of temperature against pass current.

A limitation on the known uses of PTC protection devices is that when a PTC device is placed in series with the load and sized to conduct the normal circuit current, the PTC device can take a relatively long time to convert to its tripped state on an overcurrent which is, e.g., up to a few times the normal circuit current.

The invention provides a new overcurrent protection system which will give a rapid response to even relatively small overcurrents. In the new system, a sensor element and circuit interruption element are placed in series with the load. The sensor element is functionally linked to the circuit interruption element via a control element, so that, when the current in the circuit exceeds a predetermined amount, the sensor element senses the overcurrent and communicates with the control element. The control element causes the circuit interruption element to change from a relatively conductive normal state to a relatively non-conductive fault state (including a completely open state). The invention also provides a new relay assembly which is useful in circuit protection arrangements including circuit protection arrangements of the invention. The new relay assembly, comprises a wiper and an electrical contact. When the wiper is in contact with the relay contact, thereby making a connection, the wiper will open the connection when a current through the connection exceeds a predetermined current amount.

In an example of a preferred embodiment of the invention, the functions of the sensor element and circuit interruption element are combined in a sensor-interrupt element and are provided by a relay having a new bimetal wiper which, itself, is an aspect of the invention. When the relay is energized, the bimetal wiper of the relay is placed in series with the parallel combination of the load and the control element. When an overcurrent passes through such a system, the bimetal wiper disengages from the relay contact thereby breaking the circuit to the load and the control element. The control element causes the sensor-interrupt element to latch open in the fault state.

In one aspect, the invention provides an electrical protection device having relay contacts in series between an electrical power supply and an electrical power load to form an operating circuit, the operating circuit having an on state and an off state and comprising a current carrying line and a return line between the electrical power supply and the electrical load, the electrical protection device for protecting the operating circuit from overcurrent and having a relay coil connected in parallel across the electrical power supply in the on state, the protection device comprising a single relay package including:
a frame,
the relay coil mounted to the frame,
an armature pivotally mounted to the frame and mechanically actuated from a normally closed contact position to a normally open contact position when the coil is energized, characterised by:
   a bimetallic wiper mounted to the armature,
   the contacts including a wiper contact mounted to the bimetallic wiper and a normally open contact,
   a diode connected in series with the relay coil and the normally open contact to pass coil energizing current to the coil from the electrical power supply during the on state and to prevent backflow of coil energizing current to reach the electrical power load when power is first applied to the coil,
   a first coil lead connected to the relay coil and a second coil lead connected to an anode of the diode,
   a first contact lead being connected to the wiper contact, and
   a second contact lead being connected to the normally open contact, such that in the on state the relay coil is connected to the electrical power supply through the diode and causes the wiper contact to connect to the normally open contact so that the current carrying line connects the electrical power supply to the electrical power load through the first contact lead and the second contact lead, the bimetallic wiper being responsive to an overcurrent in the power supply path by changing shape and moving the wiper contact out of connection with the normally open contact thereby placing the operating circuit in the off state.

It will be apparent that polymeric PTC devices, ceramic PTC devices, other PTC devices such as bimetal devices, metallic PTC devices, arrangements of solid state devices with PTC characteristics, and devices displaying similar characteristics may be used in the circuit arrangements of this invention to provide reliable overcurrent protection. It will likewise be apparent to those of ordinary skill in the art that mechanical switches used in the circuit arrangements of this invention may include switches, relays, circuit breakers, isolators, bimetal devices and other devices. In addition, a solid state device or combination of solid state devices which provide disconnecting characteristics similar to those provided by mechanical switches may be used in place of the mechanical switches. Bimetal devices have also been referred to as bimetallic devices, electrothermal relays, thermally activated switches and/or electrothermal mechanisms with bimetal elements.

It will be apparent that in the preferred embodiments, this invention permits the use of PTC devices and bimetal switches to be arranged with mechanical switches and other electrical devices to provide reliable protection which protection was not previously available in the art. These and other features, objects and advantages will be understood or apparent to those of ordinary skill in the art from the following detailed description of the preferred embodiments of the invention as illustrated in the various drawing figures.

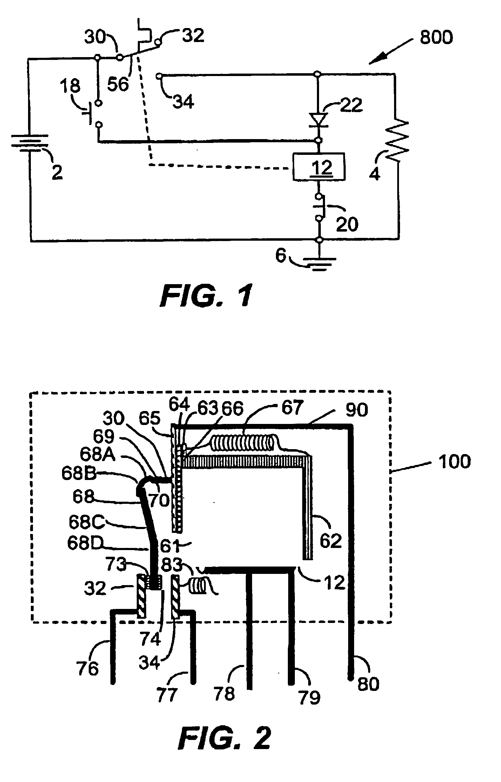

FIG. **1** is an example of an embodiment of an overcurrent protection circuit **800** employing a bimetal device including a set of relay contacts comprising a bimetal wiper structure **56**. The structure and operation of the relay comprising a bimetal wiper structure are will be described in relation to FIG. **2**.

With the circuit **800** in an OFF state, the bimetal wiper structure **56** in its normal state and is against the normally closed contact **32.** The circuit **800** is turned on by momentarily pressing the ON switch **18.** Current flows through the relay coil **12,** energizing the relay coil **12** and causing the bimetal wiper structure **56** to move to the normally open contact **34.** The diode **22** prevents full operating current from flowing from the power supply to the load **4** through switch 18. With the ON switch **18** released, current flows through the bimetal wiper structure **56** to the load **4,** and also through the series combination of the diode **22** and the relay coil **12,** thereby keeping the relay coil **12** energized. In case of an overcurrent, the bimetal wiper structure **56** heats up and trips to its fault state thereby moving off the normally open contact **34.** The relay coil **12** deenergizes and the bimetal wiper structure **56** moves to the normally closed contact **32.** Current ceases to flow in the circuit **800,** and the bimetal wiper **56** cools and returns to its normal state. The tension from the relay spring (**67** FIG. **2**) keeps the bimetal wiper structure against the normally closed contact **32.** The circuit **800** latches in the fault state with no current flowing. The momentary OFF switch **20** is used to turn the circuit OFF under normal operating conditions.

In FIG **1**, both the momentary ON switch **18** and OFF switch **20** are shown as mechanical switches or buttons. However, either or both can be implemented, for example, with solid state devices or by supplying an electrical pulse from an external control unit.

The relays shown in the circuit diagrams in the various FIGs. may also comprise a fusing member **90** within their respective structures to minimize the chance of catastrophic failure due to welding of the relay contacts.

The relay assembly shown in FIG. **2** represents a relay having a bimetal wiper structure **56**. The configuration shown is a common relay configuration and is shown merely by way of example and is not intended to be limiting. Since relays are well known in the art, the structure and operation of the relay assembly depicted in FIG. **2** will be described only to the extent necessary to explain the use of a bimetal wiper. The assembly includes a relay coil **12** and a magnetic core 61 mounted on a first leg of an L-shaped support member **62.** A ferromagnetic arm **63** is hinged **66** to a distal end of a second leg of the support member **62.** The ferromagnetic arm **63** has a first face which is directed toward an end of the magnetic core **61.** An insulating layer **64** is sandwiched between a second face of the ferromagnetic arm 63 and a first face of a wiper support arm **65.** A bimetal wiper arm **68** is affixed, e.g. welded, to a second face of the wiper support arm **65.** The bimetal wiper arm **68** is comprised of two dissimilar metal layers **69,70.** The shape of the bimetal wiper arm **68** will depend on the configuration of the particular relay. As an example, however, the shape of the bimetal wiper arm **68** depicted in FIG. 2 may be generally described in terms of four sections. The first wiper section **68A** is a substantially straight section, a first end of which is affixed, e.g. welded, to the wiper support arm **65.** The first wiper section **68A** is mounted substantially perpendicular to the wiper support arm **65.** The second wiper section **68B** is arcuate, and traces an arc slightly greater than one quarter circle. The third wiper section **68C** is substantially straight. The fourth wiper section **68D** is substantially straight, and makes an angle with the third wiper section **68C,** which angle is substantially 270 degrees minus the angle traced by the second wiper section **68B.** Thus, when the bimetal wiper arm **68** is cool, the fourth wiper section **68D** lies in a plane which is substantially parallel with the plane of the wiper support arm **65** thereby accommodating a normally open contact **71** and normally closed contact **72** which are mounted so that they also lie in planes which are substantially parallel with the plane of the wiper support arm **65.** In other relay configurations, the shape of the bimetal wiper arm **68** may vary from that described above in order to accommodate the specific requirements of each configuration.

First and second contact pads **73 74** are affixed to either face of a distal end of **the** bimetal wiper arm **68.** The first contact pad **73** is positioned opposite a normally closed contact **32** so that the two are held together in compression when the relay assembly is in a deenergized state (illustrated in FIG. **2**), and the second contact pad **74** is positioned opposite a normally open contact **34** so that the two are held together in compression when the relay assembly is in an energized state (not illustrated). The normally closed **32** contact and normally open contact **34** are mounted so that they lie in planes substantially parallel with the wiper support arm **65** (as described above). A first spring **67,** having a first end attached to a first end of the ferromagnetic arm **63** and a second end attached to the support structure **62,** maintains tension on the first end of the ferromagnetic arm **63** thereby causing the ferromagnetic arm **63** to rotate about the hinge area **66,** thereby causing the distal end of the ferromagnetic arm **63** to tend to rotate away from the magnetic core **61,** thereby causing the assembly of the ferromagnetic arm **63,** wiper support arm **65** and bimetal wiper arm **68** of bimetal wiper structure **56** to tend to rotate toward the normally closed contact **32** thereby bringing the first contact pad **73** in compression contact with the normally closed contact **32.**

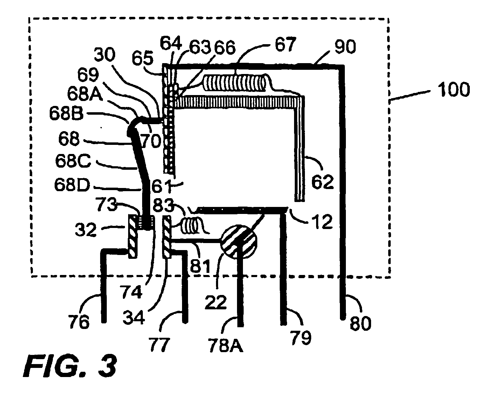

First and second electrical leads **78 79** connect the relay coil **60** to an external power source (not illustrated) in FIGS. **2** and **3**. When power is applied to the relay coil **12,** the magnetic core **61** becomes magnetized attracting the ferromagnetic arm **63.** The ferromagnetic arm **63** rotates about the hinge **66** with the distal end of the ferromagnetic arm 63 rotating toward the magnetic core **61.** The motion of the ferromagnetic arm **63** causes the wiper support arm **65** and bimetallic wiper arm **68** to move in a like manner, thereby breaking the contact between the first contact pad **73** and the normally closed contact **32.** The assembly 56 of the ferromagnetic arm **63,** wiper support arm **65** and bimetal wiper **68** continue to rotate until the ferromagnetic arm **63** rests against the magnetic core **61,** and the second contact pad **74** is held in compression contact against the normally open contact **34.**

The bimetal wiper arm **68** will retain its shape as long as the current through it is below a predetermined current level and/or the temperature of the bimetal wiper arm **68** is below a predetermined temperature. However, if the current through the bimetal wiper **68** should exceed the predetermined current level, thereby causing the temperature of the bimetal wiper arm **68** to exceed the predetermined temperature, then the bimetal wiper arm **68** will change its shape, tending to straighten out, thereby causing the distal end of the bimetal wiper arm **68** to move away from the normally open contact **34,** thereby causing the second contact pad **74** to break contact with the normally open contact **34.**

In some circumstances, heat generated during normal operation of the relay may tend to cause the bimetal wiper arm **68** to heat up and change its shape slightly. If the bimetal wiper **68** is in the normally closed position, the tension provided by the first spring **67** will keep the first contact pad **73** held in compression against the normally closed contact **32.** A second spring **83** is used to insure that the second contact pad **74** is held in compression against the normally open contact **34** with the relay in the energized position. A first end of the second spring **83** is fixed to the normally open contact **34**. A second end of the second spring **83** is attached to an insulated mount (not illustrated) within the relay assembly. The second spring **83** urges (tension or compression depending on how the second spring is mounted) the normally open contact **34** toward the wiper assembly, thereby assuring a good compression contact between the second contact pad **74** and the normally open contact **34** when the relay is energized. Although the second spring **83** is depicted as a coil spring, other suitable springs, e.g. leaf, may be used. Moreover, rather than attach a contact to a separate spring, the contact itself can be a spring, e.g. leaf, coil, etc., and thereby keep in compression contact with the wiper assembly.

FIG. **2** and the above description depict a relay assembly having a bimetal wiper configured to break contact with a normally open contact upon an overcurrent through the bimetal wiper. This is intended solely to be by way of example, and should not be interpreted as so limiting. Relay assemblies employing the bimetal wiper of the invention may be configured to have a wiper break contact with a normally closed contact, a normally open contact, or with whichever relay contact the wiper is making contact upon an overcurrent through the bimetal wiper.

The circuit depicted in FIG. **1** employs the relay assembly depicted in FIG. **2** to advantage by placing the relay coil **12** in the current path which includes the wiper structure **56.** Thus, when the bimetal wiper structure **56** breaks contact with the normally open contact **34,** the relay coil **12** immediately deenergizes, causing the bimetal wiper structure **56** to move back to the normally closed contact **34**, and to remain there until the relay coil **12** is again energized. The relay assembly shown in FIG. **3** is the relay assembly shown in FIG. **2** with a diode **22** included in the assembly. The second electrical lead **78A** is connected to the diode **22** (anode side illustrated) and the relay coil **12**, and a contact lead **81** connects the diode **22** (cathode side illustrated) with the normally open contact **34**. Thus, the key components of the circuit protection arrangement of FIG. **1**, including the relay coil **12**, contacts **30,32,34**, bimetal wiper structure **56**, and diode **22** can be conveniently combined in a single relay package **100**. As seen in Fig. **3** connection leads **76,77,78A,79**, and **30** extend outwardly of the package **100** to enable suitable electrical connections to be made, such as shown in Fig. **1**.

## Claims

1. An electrical protection device having relay contacts (30,32,34) in series between an electrical power supply (2) and an electrical power load (4) to form an operating circuit, the operating circuit having an on state and an off state and comprising a current carrying line and a return line between the electrical power supply (2) and the electrical load (4), the electrical protection device for protecting the operating circuit from overcurrent and having a relay coil (12) connected in parallel across the electrical power supply (2) in the on state, the protection device comprising a single relay package including:
a frame (62),
the relay coil (12) mounted to the frame (62),
an armature (63) pivotally mounted to the frame (12) and mechanically actuated from a normally closed contact position (32) to a normally open contact position (34) when the coil is energized, **characterised by** :
a bimetallic wiper mounted to the armature (63),
the contacts including a wiper contact (73,74) mounted to the bimetallic wiper and a normally open contact (34),
a diode (22) connected in series with the relay coil (12) and the normally open contact (34) to pass coil energizing current to the coil (12) from the electrical power supply (2) during the on state and to prevent backflow of coil energizing current to reach the electrical power load (4) when power is first applied to the coil (12);
a first coil lead connected to the relay coil (12) and a second coil lead connected to an anode of the diode (22),
a first contact lead (78) being connected to the wiper contact, and
a second contact lead (79) being connected to the normally open contact (34), such that in the on state the relay coil (12) is connected to the electrical power supply (2) through the diode (22) and causes the wiper contact (74) to connect to the normally open contact (34) so that the current carrying line connects the electrical power supply (2) to the electrical power load (4) through the first contact lead (78) and the second contact lead (79), the bimetallic wiper (56) being responsive to an overcurrent in the power supply path by changing shape and moving the wiper contact (74) out of connection with the normally open contact (34) thereby placing the operating circuit in the off state.

2. The electrical protection device set forth in claim 1 wherein the operating circuit includes a momentary make switch means for momentarily applying energizing current directly to the relay coil.

3. The electrical protection device set forth in claim 1 wherein the operating circuit includes a momentary break switch means for momentarily breaking current flow to the relay coil.

4. The electrical protection device set forth in claim 1 wherein the armature comprises an arm of ferromagnetic material pivotally mounted to the frame and being biased by a bias spring to the normally closed position.

5. The electrical protection device set forth in claim 1 wherein the bimetallic wiper is comprised of two dissimilar metal layers formed to have a first straight section affixed to the armature, a second arcuate section generally following an arc slightly greater than one quarter circle, a third substantially straight section, and a fourth wiper substantially straight section supporting at a distal end the wiper contact and forming an angle with the third wiper section which is substantially 270 degrees minus the angle traced by the second wiper section.

6. The electrical protection device set forth in claim 5 wherein the bimetallic wiper tends to straighten out in response to an overcurrent and thereby cause the wiper contact to move away from the normally open contact.

7. The electrical protection device set forth in claim 1 further comprising a normally closed contact oppositely facing the normally open contact and which is connected to the wiper contact when the operating circuit is in the off state.

8. The electrical protection device set forth in claim 1 wherein the bimetallic wiper structure includes a fusing member for opening to minimize catastrophic failure due to welding together of said wiper contact and said normally open contact.

## Patentansprüche

1. Elektrische Schutzvorrichtung, die Relaiskontakte (30, 32, 34) in Reihe zwischen einer elektrischen Energieversorgung (2) und einer elektrischen Last (4) hat, um einen Betriebsstromkreis zu bilden, wobei der Betriebsstromkreis einen Ein-Zustand und einen Aus-Zustand hat und eine Energieführungsleitung und eine Rückleitung zwischen der elektrischen Energieversorgung (2) und der elektrischen Last (4) umfasst, die elektrische Schutzvorrichtung zum Schützen des Betriebsstromkreises vor Überstrom und eine Relaisspule (12) habend, die in Parallelschaltung über die elektrische Energieversorgung (2) in dem Ein-Zustand verbunden ist, die Schutzvorrichtung umfassend ein einzelnes Relais-Bauelement, das enthält:
einen Rahmen (62),
die Relaisspule (12) an dem Rahmen (62) montiert,
einen Anker (63), der schwenkbar an dem Rahmen (62) montiert ist und mechanisch von einer normalerweise geschlossenen Kontaktposition (32) zu einer normalerweise offenen Kontaktposition (34) betätigt wird, wenn die Spule energetisiert wird, **gekennzeichnet durch**:
einen bimetallischen Schleifer, der an dem Anker (63) montiert ist,
die Kontakte enthaltend einen Schleiferkontakt (73, 74), der an dem bimetallischen Schleifer montiert ist, und einen normalerweise offenen Kontakt (34),
eine Diode (22), die in Reihe mit der Relaisspule (12) und dem normalerweise offenen Kontakt (34) verbunden ist, um Spulenenergisierungsstrom während des Ein-Zustands von der elektrischen Energieversorgung (2) zu der Spule (12) zu leiten und um zu verhindern, dass Rückfluss von Spulenenergisierungsstrom die elektrische Last (4) erreicht, wenn zuerst Energie an die Spule (12) gelegt wird,
eine erste Spulenleitung, die mit der Relaisspule (12) verbunden ist, und eine zweite Spulenleitung, die mit einer Anode der Diode (22) verbunden ist,
eine erste Kontaktleitung (78), die mit dem Schleiferkontakt verbunden ist, und
eine zweite Kontaktleitung (79), die mit dem normalerweise offenen Kontakt (34) verbunden ist,
derart, dass die Relaisspule (12) in dem Ein-Zustand **durch** die Diode (22) mit der elektrischen Energieversorgung (2) verbunden ist und bewirkt, dass der Schleiferkontakt (74) mit dem normalerweise offenen Kontakt (34) verbunden wird, so dass die Stromführungsleitung die elektrische Energieversorgung (2) **durch** die erste Kontaktleitung (78) und die zweite Kontaktleitung (79) mit der elektrischen Last (4) verbindet, wobei der bimetallische Schleifer (56) auf einen Überstrom in dem Energieversorgungsweg reagiert, indem er seine Form ändert und den Schleiferkontakt (74) aus der Verbindung mit dem normalerweise offenen Kontakt (34) bewegt und **dadurch** den Betriebsstromkreis in den Aus-Zustand versetzt.

2. Elektrische Schutzvorrichtung nach Anspruch 1, wobei der Betriebsstromkreis ein Momentanschließschaltmittel für momentanes Anlegen von Energetisierungsstrom direkt an die Relaisspule enthält.

3. Elektrische Schutzvorrichtung nach Anspruch 1, wobei der Betriebsstromkreis ein Momentanunterbrechungsschaltmittel für momentanes Unterbrechen von Stromfluss zu der Relaisspule enthält.

4. Elektrische Schutzvorrichtung nach Anspruch 1, wobei der Anker einen Arm aus ferromagnetischem Material umfasst, der schwenkbar an dem Rahmen montiert ist und durch eine Vorbelastungsfeder in die normalerweise geschlossene Position gerichtet wird.

5. Elektrische Schutzvorrichtung nach Anspruch 1, wobei der bimetallische Schleifer aus zwei verschiedenen Metallschichten besteht, die gebildet sind, um einen ersten geraden Abschnitt an dem Anker angebracht zu haben, einen zweiten gebogenen Abschnitt zu haben, der im Allgemeinen einem Bogen folgt, der geringfügig größer ist als ein Viertelkreis, einen dritten im Wesentlichen geraden Abschnitt zu haben und einen vierten im Wesentlichen geraden Schleiferabschnitt zu haben, der an einem entfernten Ende den Schleiferkontakt trägt und einen Winkel mit dem dritten Schleiferabschnitt bildet, der im Wesentlichen 270 Grad minus dem Winkel, der von dem zweiten Schleiferabschnitt gebildet wird, beträgt.

6. Elektrische Schutzvorrichtung nach Anspruch 5, wobei der bimetallische Schleifer dazu tendiert, sich als Reaktion auf einen Überstrom gerade zu richten und dadurch bewirkt, dass der Schleiferkontakt sich von dem normalerweise offenen Kontakt weg bewegt.

7. Elektrische Schutzvorrichtung nach Anspruch 1, weiter umfassend einen normalerweise geschlossenen Kontakt, der dem normalerweise offenen Kontakt gegenüberliegt und darauf weist und der mit dem Schleiferkontakt verbunden ist, wenn der Betriebsstromkreis in dem Aus-Zustand ist.

8. Elektrische Schutzvorrichtung nach Anspruch 1, wobei die bimetallische Schleiferstruktur ein Schmelzglied zum Öffnen enthält, um katastrophalen Ausfall aufgrund von Zusammenschweißen des Schleiferkontakts und des normalerweise offenen Kontakts zu minimieren.

## Revendications

1. Dispositif de protection électrique qui comporte des contacts de relais (30, 32, 34) en série entre une alimentation électrique (2) et une charge de puissance électrique (4) afin de former un circuit opérationnel, le circuit opérationnel présentant un état de marche et un état d'arrêt et comprenant une ligne de transport de courant et une ligne de retour entre l'alimentation électrique (2) et la charge électrique (4), le dispositif de protection électrique permettant de protéger le circuit opérationnel vis-à-vis d'une surintensité et comportant une bobine de relais (12) qui est connectée en parallèle aux bornes de l'alimentation électrique (2) dans l'état de marche, le dispositif de protection comprenant un unique module de relais incluant:
un châssis (62);
la bobine de relais (12) qui est montée sur le châssis (62); et
un induit (63) qui est monté de façon pivotante sur le châssis (12) et qui est actionné mécaniquement depuis une position de contact normalement fermé (32) jusqu'à une position de contact normalement ouvert (34) lorsque la bobine est alimentée,
**caractérisé par**:
un balai bimétallique qui est monté sur l'induit (63),
les contacts incluant un contact de balai (73, 74) qui est monté sur le balai bimétallique et un contact normalement ouvert (34);
une diode (22) qui est connectée en série avec la bobine de relais (12) et le contact normalement ouvert (34) pour laisser passer un courant d'activation de bobine jusqu'à la bobine (12) depuis l'alimentation électrique (2) pendant l'état de marche et pour empêcher qu'une circulation en retour du courant d'activation de bobine n'atteigne la charge de puissance électrique (4) lorsque de la puissance est en premier lieu appliquée sur la bobine (12);
une première connexion de bobine qui est connectée à la bobine de relais (12) et
une seconde connexion de bobine qui est connectée à une anode de la diode (22);
une première connexion de contact (78) qui est connectée au contact de balai; et
une seconde connexion de contact (79) qui est connectée au contact normalement ouvert (34)
de telle sorte que dans l'état de marche, la bobine de relais (12) soit connectée à l'alimentation électrique (2) par l'intermédiaire de la diode (22) et ait pour effet que le contact de balai (74) soit connecté au contact normalement ouvert (34) de telle sorte que la ligne de transport de courant connecte l'alimentation électrique (2) à la charge de puissance électrique (4) par l'intermédiaire de la première connexion de contact (78) et de la seconde connexion de contact (79), le balai bimétallique (56) étant sensible à une surintensité dans la voie d'alimentation en modifiant sa forme et en déplaçant le contact de balai (74) hors de connexion avec le contact normalement ouvert (34) en plaçant ainsi le circuit opérationnel dans l'état d'arrêt.

2. Dispositif de protection électrique selon la revendication 1, dans lequel le circuit opérationnel inclut un moyen de commutateur de mise en contact momentanée pour appliquer de manière momentanée un courant d'activation directement sur la bobine de relais.

3. Dispositif de protection électrique selon la revendication 1, dans lequel le circuit opérationnel inclut un moyen de commutateur de rupture momentanée pour rompre de manière momentanée une circulation de courant jusqu'à la bobine de relais.

4. Dispositif de protection électrique selon la revendication 1, dans lequel l'induit comprend un bras en un matériau ferromagnétique qui est monté de façon pivotante sur le châssis et qui est poussé par un ressort de poussée jusqu'à la position normalement fermée.

5. Dispositif de protection électrique selon la revendication 1, dans lequel le balai bimétallique est constitué par deux couches métalliques dissemblables qui sont formées de manière à présenter une première section droite qui est fixée à l'induit, une seconde section incurvée qui suit de façon générale un arc légèrement plus grand qu'un quart de cercle, une troisième section sensiblement droite et une quatrième section sensiblement droite de balai supportant au niveau d'une extrémité distale le contact de balai et formant un angle avec la troisième section de balai qui vaut sensiblement 270° moins l'angle formé par la seconde section de balai.

6. Dispositif de protection électrique selon la revendication 5, dans lequel le balai bimétallique tend à se redresser en réponse à une surintensité et à avoir ainsi pour effet que le contact de balai s'éloigne du contact normalement ouvert.

7. Dispositif de protection électrique selon la revendication 1, comprenant en outre un contact normalement fermé qui fait face de manière opposée au contact normalement ouvert et qui est connecté au contact de balai lorsque le circuit opérationnel est dans l'état d'arrêt.

8. Dispositif de protection électrique selon la revendication 1, dans lequel la structure de balai bimétallique inclut un élément de fusion pour une ouverture afin de minimiser une défaillance catastrophique due à un soudage ensemble dudit contact de balai et dudit contact normalement ouvert.
